# EUROPEAN PATENT APPLICATION

(11) **EP 4 831 596 A1**
(43) Date of publication of application: **28.10.2026**
(21) Application number: 24906958.4
(22) Date of filing: 07.11.2024
(51) Int. Cl.: G01F 23/284

(54) **SENSOR MODULE**

(30) Priority: 20.12.2023 JP 2023214868
(71) Applicant: HOSIDEN CORPORATION, Yao-shi, Osaka 581-0071 (JP)
(72) Inventor: MAEDA Koki, Yao-shi, Osaka 581-0071 (JP); TOYOTA Naoki, Yao-shi, Osaka 581-0071 (JP)
(74) Representative: LBP Lemcke, Brommer & Partner Patentanwälte mbB
(86) International application number: PCT/JP2024/039557
(87) International publication number: WO 2025/134570

(57) **Abstract**

A sensor module (100) mounted to an opening (2) of a container (1) storing a contained material (5) includes a cap (3) and a sensor unit (20). The cap (3) includes a lid (3a) configured to close the opening (2), a lens unit (32), a support wall (33) disposed around the lens unit (32) to extend upward and configured to hold the sensor unit (20), and a lateral wall (36). The sensor unit (20) includes a transceiver section (21) including a transmitter (21a) and a receiver (21b). The lens unit (32) is disposed to face the transceiver section (21) of the sensor unit (20), the transmitter (21a) is configured to transmit radio waves that pass through the lens unit (32) to reach an internal space (1a) of the container (1), and the receiver (21b) is configured to receive a reflected wave resulting from the radio waves being reflected from the contained material (5) in the internal space (1a). The lateral wall (36) is disposed around the lens unit (32) to extend in the same direction as the support wall (33).

## Description

### Technical Field

This disclosure relates to a sensor module.

### Background Art

In cold districts such as Hokkaido, for example, kerosene is used as fuel of main indoor heating equipment. In order to continuously use the heating equipment in winter, a fuel tank installed outdoors and capable of supplying kerosene from outdoors to the indoor heating equipment is often used as a source for supplying kerosene to the heating equipment. However, in order to continuously use the heating equipment, it is preferable that the fuel tank be replenished with kerosene before the kerosene is depleted, rather after the kerosene has run out. For this purpose, some fuel tanks are equipped with a dedicated remaining amount detection sensor.

Patent Literature 1 discloses a radar level measurement device using radar signals. The radar level measurement device includes: an antenna unit configured to emit radar signals toward the water-level boundary surface and to receive the radar signals reflected from the water-level boundary surface; and a control unit configured to perform transmission control on the radar signals emitted from the antenna unit, reception control on the radar signals received by the antenna unit, and water-level measurement control using the received radar signals. The antenna unit includes: a lens configured to transmit and receive radar signals in a direction perpendicular to the water-level boundary-surface; and an absorber configured to reduce the side lobe of the radar signals transmitted and received through the lens.

### Citation List

### Patent Literature

Patent Literature 1: Japanese Unexamined Patent Application Publication No. 2022-079404

### Summary of Invention

### Technical Problem

The radar level measurement device described in Patent Literature 1 can reduce, by the absorber, the side lobe of radar signals transmitted toward a waveguide and the lens by a radar-signal transmission and reception processing unit but cannot reduce, by the absorber, the side lobe of radar signals transmitted in the other directions. This radar level measurement device also uses another component called the waveguide, which may increase the number of components in the device and assembly man-hours and also increase in cost.

In view of this, it is desired to achieve, at low cost, a sensor module capable of reducing the side lobe of radio waves that adversely affects the accuracy of detecting a remaining amount.

### Solution to Problem

One aspect of a sensor module according to this disclosure is a sensor module mounted to an opening of a container storing a contained material. The sensor module includes a cap and a sensor unit. The cap includes: a lid configured to close the opening; a lens unit; a support wall disposed around the lens unit to extend upward and configured to hold the sensor unit; and a lateral wall. The sensor unit includes a transceiver section including a transmitter configured to transmit radio waves and a receiver configured to receive the radio waves. The lens unit is disposed to face the transceiver section of the sensor unit, the transmitter is configured to transmit the radio waves that pass through the lens unit to reach an internal space of the container, and the receiver is configured to receive a reflected wave resulting from the radio waves being reflected from the contained material in the internal space. The lateral wall is disposed around the lens unit to extend in the same direction as the support wall.

In this aspect, the sensor module is disposed at the opening of the container. Accordingly, there is no need to modify the existing container in order to install the sensor module in the container, and the remaining amount of the contained material stored in the container can be detected without modifying the container. Since the remaining amount of the contained material is calculated using radio waves, the remaining amount of the contained material can be detected easily at predetermined time intervals. Besides, the lateral wall extending in the same direction as the support wall is disposed around the lens unit and between the lens unit and the support wall disposed around the lens unit to extend upward. As a result, it is possible to suppress an adverse influence of the side lobe of the radio waves transmitted from the transmitter on the reflected wave. Since the lateral wall and the support wall are different components, it is possible to freely set the position at which the lateral wall is disposed in accordance with the occurrence state of the side lobe. It is necessary that the support wall be fixed with the sensor unit being held by the support wall, and in a case where the lateral wall is disposed on the support wall, there may be restrictions on the position or shape of the lateral wall.

As another aspect of the sensor module according to this disclosure, the sensor unit may further include a calculation section configured to calculate a remaining amount of the contained material or information for calculating the remaining amount based on time from when the radio waves are transmitted from the transmitter to when the reflected wave is received by the receiver.

In this aspect, the calculation section calculates the remaining amount of the contained material or information for calculating the remaining amount by calculating the time required until reception of the radio wave directly reflected from the contained material. Accordingly, it is possible to detect the remaining amount of the contained material or information for calculating the remaining amount by a single sensor module at high resolution.

The sensor module according to another aspect of this disclosure may further include an external communication unit configured to wirelessly transmit, to an external device, a signal representing the remaining amount of the contained material or the information for calculating the remaining amount, calculated by the calculation section.

In this aspect, with the use of the sensor module, it is possible to know the remaining amount of the contained material at a location remote from the container without visually checking the inside of the container.

The sensor module according to another aspect of this disclosure may further include a power supply unit configured to supply electric power to the sensor unit and the external communication unit.

In this aspect, the sensor module can continue to operate without using an external power source.

The sensor module according to another aspect of this disclosure may further include a housing attachable to and detachable from the cap, and the sensor unit may be stored in a space enclosed by the cap and the housing.

In this aspect, the cap and the housing are attachable to and detachable from each other. Accordingly, the housing can be removed from the cap at the time when the sensor unit fails, and the sensor unit can be repaired or replaced, for example.

As another aspect of the sensor module according to this disclosure, the lateral wall may be integrated with the lid.

In this aspect, in comparison with a case where the cap is assembled with the use of the lid and the lateral wall individually manufactured, it is possible to manufacture the cap with low man-hours and at low cost. Besides, the cap can have high positional accuracy of the lateral wall relative to the lid.

As another aspect of the sensor module according to this disclosure, the lateral wall may have a cylindrical shape.

In this aspect, even when the side lobe of the radio waves from the transmitter is transmitted in any direction, it is possible to reduce the side lobe that adversely affects the reflected wave. Besides, restrictions on the mounting direction of the transceiver section or the like are eliminated, thereby increasing the degree of freedom in assembling the sensor module.

As another aspect of the sensor module according to this disclosure, the radio waves transmitted from the transmitter may be millimeter waves.

In this aspect, with the use of millimeter waves for the radio wave, the radio wave can pass through resin. Accordingly, even when the sensor module is disposed on the outer side of the cap made of resin in the container, it is possible to calculate the remaining amount of the contained material in the container through the cap. In a case where the radio wave is light such as infrared or visible light, at least part of the cap must be made of a transparent or translucent resin, or a hole must be provided in the cap, in order for the radio wave to pass through the cap. However, when the radio wave is a millimeter wave, the cap does not need to be made of a transparent or translucent material or to be provided with a hole.

### Brief Description of Drawings

Fig. 1 is an exploded view illustrating a sensor module and a fuel tank according to the present embodiment in a separated manner;
Fig. 2 is an exploded perspective view of the sensor module;
Fig. 3 is an exploded perspective view of the sensor module;
Fig. 4 is a sectional view illustrating the sensor module mounted to a fuel tank;
Fig. 5 is a view illustrating an electromagnetic field simulation result of radio waves transmitted from a transmitter in a case where no lateral wall is provided; and
Fig. 6 is a view illustrating an electromagnetic field simulation result of radio waves transmitted from the transmitter in a case where a lateral wall is provided.

### Description of Embodiments

Embodiments of a sensor module according to this disclosure will be described below with reference to the drawings. Note that the following embodiments are just examples to describe the sensor module and are not intended to limit the sensor module according to this disclosure to those embodiments. Accordingly, the sensor module according to this disclosure can be modified variously without deviating from the gist of the present invention.

### [Configuration of Sensor Module]

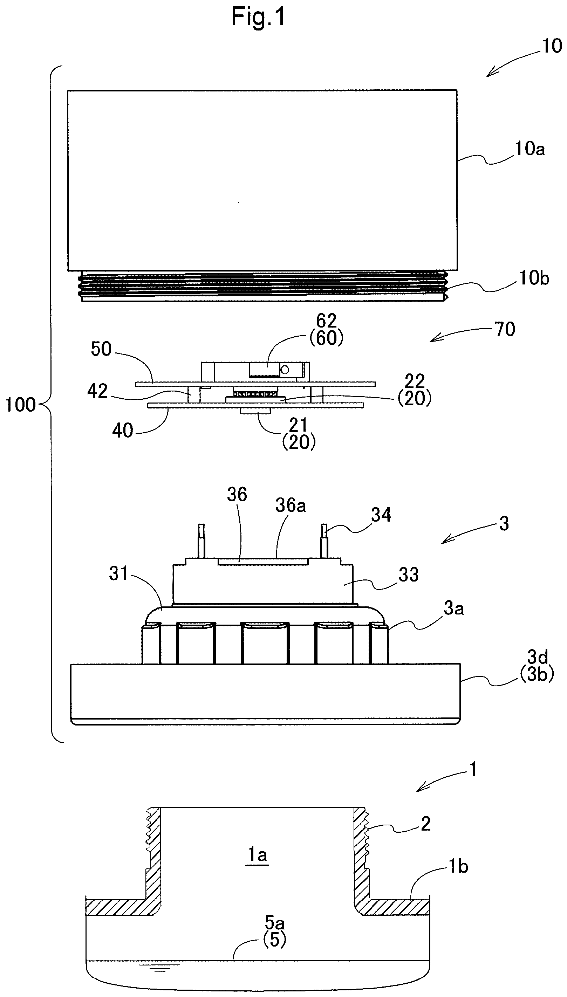

As illustrated in Fig. 1, a sensor module 100 according to the present embodiment is used in such a manner that the sensor module 100 is mounted to the outer side of an opening 2 of a fuel tank 1 (an example of a container). The fuel tank 1 includes a tank body 1b, and the opening 2 having a cylindrical shape and projecting from the tank body 1b. The tank body 1b has an internal space 1a in communication with an inner space of the opening 2, and kerosene 5 (an example of a contained material) is supplied to the internal space 1a through the opening 2. Hereby, the kerosene 5 is stored in the internal space 1a. The sensor module 100 detects the remaining amount of the kerosene 5 stored in the internal space 1a of the fuel tank 1 or information used for calculating the remaining amount (hereinafter also referred to as the "remaining amount or the like"). A cap 3 is made of resin and is threadedly engaged with the opening 2 to close the opening 2. Note that the engagement between the cap 3 and the opening 2 is not limited to threaded engagement, and any method can be employed.

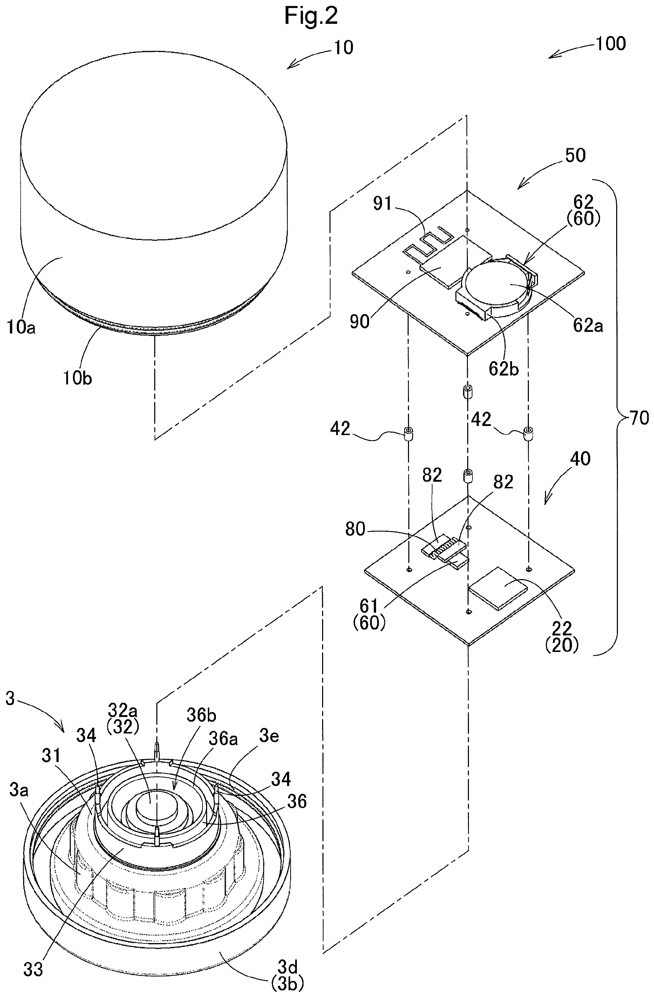

As illustrated in Figs. 2 to 4, the sensor module 100 includes the cap 3, a housing 10, a sensor unit 20, a power supply unit 60, and an external communication IC 90 (an example of an external communication unit).

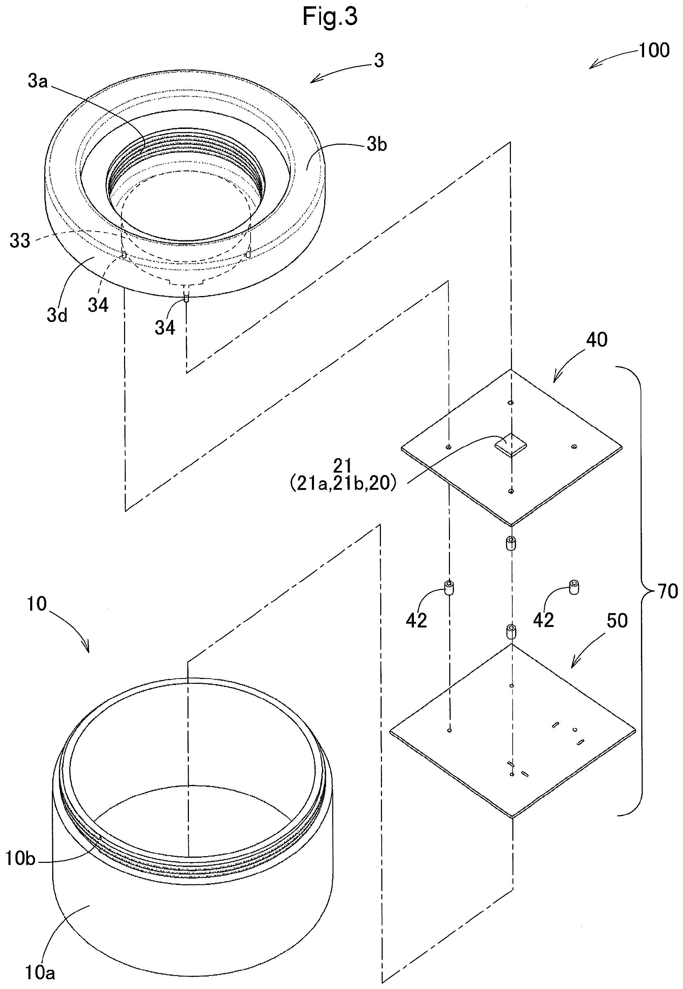

The sensor unit 20 includes a transceiver IC 21 (an example of a transceiver section), and a calculation IC 22 (an example of a calculation section). As illustrated in Figs. 2, 3, the transceiver IC 21 and the calculation IC 22 are mounted on different surfaces of a first substrate 40. The transceiver IC 21 includes a transmitter 21a and a receiver 21b. Note that the transceiver IC 21 and the calculation IC 22 may be mounted on the same surface of the first substrate 40.

The transmitter 21a of the transceiver IC 21 has a function of externally transmitting a radio wave in which a signal to be transmitted is modulated, and the receiver 21b has a function of receiving a signal by demodulating a radio wave received from outside. The transceiver IC 21 can receive the radio wave transmitted from the transmitter 21a by the receiver 21b. The transceiver IC 21 mounted on the first substrate 40 modules a signal to be transmitted and then transmits a radio wave via a transmission antenna (not illustrated) of the transmitter 21a, and also demodulates a radio wave received by a receiving antenna (not illustrated) of the receiver 21b. The calculation IC 22 has a function of calculating the remaining amount or the like of the kerosene 5 stored in the internal space 1a of the fuel tank 1 based on the time from when the radio wave is transmitted from the transmission antenna to when the radio wave is received by the receiving antenna.

The power supply unit 60 includes a power source IC 61 and a battery section 62. The power source IC 61 is mounted on the same surface of the first substrate 40 on which the calculation IC 22 is mounted. The battery section 62 includes a battery 62a, and a battery socket 62b configured to hold the battery 62a. The battery socket 62b holding the battery 62a is mounted on a surface of a second substrate 50. The transceiver IC 21, the calculation IC 22, and the power source IC 61 mounted on the first substrate 40, and an external communication IC 90 work upon receiving electric power supplied from the battery 62a mounted on the second substrate 50. The battery section 62 may be a secondary battery or a combination of a self-power-generating device and a secondary battery. Note that the power source IC 61 may be mounted on a surface of the first substrate 40 that is different from the surface on which the calculation IC 22 is mounted. In a case where the sensor module 100 does not include the second substrate 50, the battery section 62 may be mounted on the first substrate 40.

The external communication IC 90 is mounted on the same surface of the second substrate 50 on which the battery section 62 is mounted. On the surface of the second substrate 50 that is the same as the surface on which the external communication IC 90 is mounted, an external communication antenna 91 configured to externally transmit a signal generated by the external communication IC 90 is formed in a pattern. Instead of the pattern, the external communication antenna 91 may be formed using a dedicated antenna component or may be incorporated in the external communication IC 90. In a case where the sensor module 100 does not include the second substrate 50, the external communication IC 90 may be mounted on the first substrate 40.

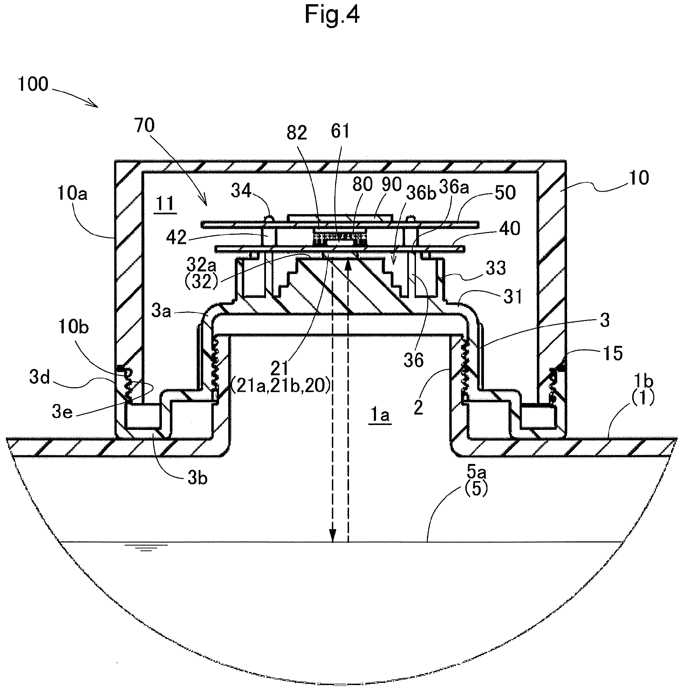

As illustrated in Figs. 2, 4, the first substrate 40 is electrically connected to the second substrate 50 by a connecting member 80. The connecting member 80 may be any member that electrically connects the first substrate 40 and the second substrate 50, such as an FFC (Flexible Flat Cable) or an FPC (Flexible Printed Circuit). At this time, connectors 82 to which both ends of the connecting member 80 are electrically connected are mounted on the first substrate 40 and the second substrate 50. That is, the first substrate 40 is electrically connected to the second substrate 50 by the connector 82 mounted on the first substrate 40, the connecting member 80, and the connector 82 mounted on the second substrate 50. Note that, instead of the above configuration, the first substrate 40 and the second substrate 50 may be electrically connected by a combination of a harness including an electric wire and plugs with receptacles mounted on the first substrate 40 and the second substrate 50, by a board-to-board connector, or by other configurations.

As illustrated in Figs. 1 to 4, the sensor unit 20, the calculation IC 22, and the power source IC 61, including the first substrate 40, the battery section 62 and the external communication IC 90, including the second substrate 50, and the connecting member 80 and the connectors 82, 82 are collectively referred to as a sensor assembly 70. That is, the sensor assembly 70 is a generic term for an assembly that includes the sensor unit 20, the power supply unit 60, the external communication IC 90, and the first substrate 40 and the second substrate 50 on which these components are mounted and which are electrically connected by the connecting member 80. Hereby, it can be said that the sensor module 100 includes the cap 3, the housing 10, and the sensor assembly 70.

The cap 3 includes a lid 3a, a fixing section 3b, a lens unit 32, a support wall 33, and a lateral wall 36. The cap 3 is made of resin. The lid 3a, the fixing section 3b, the lens unit 32, the support wall 33, and the lateral wall 36 may be formed individually, or at least two of them may be integrated with each other. In a case where some of them are integrated with each other, the cap 3 is formed more specifically in such a manner that molten resin is supplied to a single mold and cured.

The lid 3a has a bottomed cylindrical shape and has an internal thread formed on its inner lateral surface (see Figs. 3, 4). By threadedly engaging an external thread (see Figs. 1, 4) formed on an outer lateral surface of the opening 2 of the fuel tank 1 with the internal thread of the lid 3a, the cap 3 is fixed to the fuel tank 1. A method for fixing the cap 3 to the fuel tank 1 is not limited to threaded engagement between the lid 3a and the opening 2, and other methods may be employed. The lens unit 32, the support wall 33, and the lateral wall 36 are formed on a bottom wall 31 of the lid 3a. The support wall 33 is formed to extend upward from the fixing section 3b in a direction opposite to the opening 2.

The fixing section 3b extends radially outwardly from a lateral surface of the lid 3a. The fixing section 3b has an outer edge serving as a first peripheral wall 3d extending upward relative to the radial direction, and the first peripheral wall 3d has an inner peripheral surface having an internal thread 3e.

The lens unit 32 extends upward from the bottom wall 31 of the lid 3a and is disposed at a position facing the transceiver IC 21 of the sensor unit 20. In the present embodiment, the transceiver IC 21 is in close contact with a top surface 32a of the lens unit 32. However, the transceiver IC 21 may be spaced from the top surface 32a of the lens unit 32. The lens unit 32 exhibits its lens function by varying its thickness and shape. Since the cap 3 includes the lens unit 32, it is possible to enhance the efficiency of transmitting and receiving radio waves from the transceiver IC 21. More specifically, the lens unit 32 is formed by stacking a plurality of cylindrical members (e.g., three) whose outer diameters decrease toward the transceiver IC 21 from the bottom wall 31. The lens unit 32 in the present embodiment has a convex lens shape, but may have a concave lens shape, may extend in a direction opposite to the bottom wall 31, or may extend in both directions. The lens unit 32 may have any lens shape depending on the intended purpose. The lens unit 32 may not have a lens function. Note that the bottom wall 31 of the lid 3a integrated with the lens unit 32 may function as part of the lens unit 32.

The support wall 33 is disposed around the lens unit 32 and has a cylindrical shape extending upward from the outer edge of the bottom wall 31. A plurality of support bosses 34 (four, in the present embodiment) extending along the extending direction of the support wall 33 is integrated with a distal end of the support wall 33 and is arranged at equal intervals in the circumferential direction of the support wall 33. The first substrate 40 and the second substrate 50 are held by the support bosses 34 so as to be fixed to the cap 3. The first substrate 40 and the second substrate 50 have through-holes at portions corresponding to the support bosses 34, so that the support bosses 34 extend through the through-holes. A single support boss 34 may be provided, instead of the plurality of support bosses 34. Note that the support boss 34 may be disposed on the support wall 33 by press-fitting, adhesion, or other methods. Note that the support bosses 34 may be disposed at unequal intervals in the circumferential direction of the support wall 33.

In the present embodiment, due to the support bosses 34, the first substrate 40 is fixed to the cap 3 such that the transceiver IC 21 is in contact with the top surface 32a of the lens unit 32. That is, when the first substrate 40 is fixed to the cap 3, the lens unit 32 is raised to a height such that the transceiver IC 21 comes into contact with the top surface 32a. The first substrate 40 and the second substrate 50 may be fixed to the cap 3 via the support bosses 34 in such a manner that the distal ends of the support bosses 34 are heated and melted to be thermally welded to the second substrate 50, for example. The distal ends of the support bosses 34 may be formed in a split pin shape, and the first substrate 40 and the second substrate 50 may be fixed thereto. Alternatively, an internal thread may be formed in the distal ends of the support bosses 34 so that the first substrate 40 and the second substrate 50 are fixed by using external screws, or the first substrate 40 and the second substrate 50 may be fixed to the support wall 33 by external screws while the support bosses 34 are omitted. Any method can be employed, provided that the first substrate 40 and the second substrate 50 can be fixed to the cap 3.

While the first substrate 40 and the second substrate 50 are held by the support bosses 34, spacers 42 fitted over the support bosses 34 are disposed between the first substrate 40 and the second substrate 50. Due to the spacers 42, the first substrate 40 and the second substrate 50 are spaced from each other only by the length of spacers 42. Instead of the above configuration, the support boss 34 may be formed to include a base end portion with a large diameter and a distal end portion with a small diameter, so that a step is formed between the base end portion and the distal end portion. In this case, a through-hole having an inner diameter that allows the base end portion of the support boss 34 to be inserted therethrough is formed in the first substrate 40, and a through-hole having an inner diameter that allows not the base end portion but the distal end portion of the support boss 34 to be inserted therethrough is formed in the second substrate 50. Hereby, when the first substrate 40 and the second substrate 50 are fitted over the support boss 34, the second substrate 50 is supported by the step between the base end portion and the distal end portion of the support boss 34, so that the first substrate 40 and the second substrate 50 are fixed in a state where they are spaced from each other even without the spacers 42. Note that the first substrate 40 and the second substrate 50 may be disposed with the use of respective support bosses 34 having different outer diameters. Even in this case, the spacers 42 are not required.

In a case where the sensor module 100 includes the second substrate 50, the first substrate 40 and the second substrate 50 can be fixed to the cap 3 with the use of at least one support boss 34 and the spacers 42 for keeping the distance between the opposing surfaces of the first substrate 40 and the second substrate 50 constant (see Fig. 4). The first substrate 40 may be fixed to the cap 3 with the use of at least one support boss 34, and the second substrate 50 may be fixed to the cap 3 with the use of another support boss (not illustrated). Alternatively, the first substrate 40 and the second substrate 50 may be both fixed to the cap 3 by other methods. "Fixed to the cap 3" means that the fixing may be either direct to the cap 3 or indirect to the cap 3 via another member. The support boss 34 and/or another support boss may be integrated with the cap 3, may be integrated with the lens unit 32, or may be provided as a separate member.

The transceiver IC 21 (including a transmission antenna and a receiving antenna (not illustrated)) mounted on the first substrate 40 is covered with the support wall 33. Here, "covered with the support wall 33" means that the support wall 33 is in contact with the first substrate 40 so that the transceiver IC 21 is completely contained inside the support wall 33, as illustrated in Fig. 4. However, in addition to that, a gap may be provided between the support wall 33 and the first substrate 40. In this case, at least part of the transceiver IC 21, the transmission antenna (not illustrated), and the receiving antenna (not illustrated) is visually observable through the gap between the support wall 33 and the first substrate 40.

The lateral wall 36 is disposed between the lens unit 32 and the support wall 33 and has a cylindrical shape. That is, the lateral wall 36 is disposed radially outside the lens unit 32 and radially inside the support wall 33. That is, the lateral wall 36 extends in the same direction as the support wall 33 around the lens unit 32. The lateral wall 36 extends to project from the bottom wall 31 toward the transceiver IC 21. In the present embodiment, the lateral wall 36 has a projecting end portion 36a that is in contact with the first substrate 40 or is located in the vicinity thereof (see Fig. 4). Hereby, the lateral wall 36 generally completely overlaps with the transceiver IC 21 as viewed in the radial direction. That is, almost the entire transceiver IC 21 is located within a radially inner space 36b of the lateral wall 36.

The housing 10 is made of resin or metal and has a bottomed cylindrical shape with an inner diameter larger than the outer diameter of the lid 3a of the cap 3. An external thread 10b is formed on the outer peripheral surface of a second peripheral wall 10a of the housing 10. In a state where the sensor assembly 70 is fixed to the cap 3, the internal thread 3e of the cap 3 is threadedly engaged with the external thread 10b of the housing 10. An annular seal 15 is disposed in a boundary between the second peripheral wall 10a of the housing 10 and the first peripheral wall 3d of the fixing section 3b of the cap 3 (see Fig. 4). Hereby, a first space 11 (an example of an enclosed space) enclosed by the cap 3 and the housing 10 and storing the sensor assembly 70 can be maintained in a watertight state. The engagement between the housing 10 and the cap 3 is not limited to threaded engagement, and any suitable method may be employed, such as screw fastening, snap-fit engagement, welding, or adhesion.

When the opening 2 of the tank body 1b is opened, the tightening between the lid 3a and the opening 2 is loosened. The engagement by screw fastening, snap-fit engagement, welding, adhesion, or the like other than threaded engagement can effectively prevents the tightening between the cap 3 and the housing 10 from being inadvertently loosened at that time. This makes it possible to prevent such a situation that the housing 10 is easily removed from the cap 3 and trash, water drops, foreign matter, or the like enters the tank body 1b.

The engagement by screw fastening or snap-fit engagement has the following effect. That is, similarly to the threaded engagement, the housing 10 is attachable to and detachable from the cap 3. Accordingly, when the sensor unit 20 fails or when the battery 62a of the power supply unit 60 is replaced, the housing 10 can be removed from the cap 3, thereby allowing repair or replacement of the sensor unit 20, replacement of the battery 62a, and the like.

In addition, in the case of screw fastening, with the use of an O-ring or the like, a waterproof effect of the first space 11 can be improved by a fastening force and a compressive force of the screw. In a case where a screw is inserted from the cap 3 toward the housing 10 and tightened, when the lid 3a of the sensor module 100 is locked and fixed to the opening 2 of the tank body 1b in a tightened state, the screw that fixes the housing 10 to the cap 3 is concealed, thereby making it difficult to remove the screw easily. Since the housing 10 cannot be easily attached to or detached from the cap 3, it is possible to prevent the housing 10 from being removed for tampering purposes. As a locking and fixing method, such a structure is conceivable that ring-shaped portions are provided on the sensor module 100 and the fuel tank 1 so that the ring-shaped portions overlap each other when the lid 3a is tightened to the opening 2 of the tank body 1b to the maximum extent, for example, and the holes of the ring-shaped portions are used to lock and fix the lid 3a to the opening 2 with a padlock or the like.

The internal thread 3e of the fixing section 3b of the cap 3 and the external thread 10b of the second peripheral wall 10a of the housing 10 may be reversed. More specifically, an external thread is formed on the outer peripheral surface of the first peripheral wall 3d of the fixing section 3b, an internal thread is formed on the second peripheral wall 10a of the housing 10, and the external thread is threadedly engaged with the internal thread. At this time, the annular seal 15 is disposed in the boundary between the second peripheral wall 10a of the housing 10 and the first peripheral wall 3d of the fixing section 3b. Even with such a configuration, the first space 11 enclosed by the cap 3 and the housing 10 and storing the sensor assembly 70 can be maintained in a watertight state. The seal 15 for maintaining the watertight state may be an O-ring, may be a caulking agent, or may be a water-repellent material applied to a threaded portion, or other methods may be used. Note that, in Figs. 2, 3, the seal 15 is not illustrated.

### [Operation of Sensor Module]

Next will be described detection of the remaining amount or the like of the kerosene 5 using the sensor module 100 with reference to Fig. 4. In the sensor module 100 disposed on the outer side of the fuel tank 1, a transmission pulse signal generated by the transceiver IC 21 mounted on the first substrate 40 is modulated and transmitted as a radio wave from the transmission antenna (not illustrated) of the transceiver IC 21 toward the internal space 1a of the fuel tank 1 at predetermined time intervals (for example, every 10 minutes). The transmission antenna transmits millimeter-wave radio waves that pass through the lens unit 32 made of resin and formed in the cap 3 and are reflected by the kerosene 5. The radio wave is, for example, an electromagnetic pulse.

The radio wave transmitted from the transmission antenna and entering the internal space 1a of the fuel tank 1 is reflected from a liquid surface 5a of the kerosene 5 and is directed toward the sensor module 100 as a reflected wave. The reflected wave passes through the cap 3 and the lens unit 32 and is received by the receiving antenna (not illustrated).

It is ideal that all radio waves transmitted from the transmission antenna are directed to the internal space 1a of the fuel tank 1, but some of the radio waves may be transmitted not toward the internal space 1a but transmitted sideways, that is, in the direction of the support wall 33 or the like. Hereinafter, a radio wave transmitted in the direction toward the internal space 1a is also referred to as the main lobe, and a radio wave transmitted in a direction other than toward the internal space 1a is referred to as the side lobe.

When the radio waves transmitted from the transmission antenna include not only a main lobe but also a side lobe, the side lobe adversely affects the reception when the radio wave reflected from the surface of the kerosene 5 stored in the fuel tank 1 is received by the receiving antenna, which may decrease the detection accuracy of the remaining amount or the like of the kerosene 5. In view of this, in the present embodiment, the cylindrical lateral wall 36 is formed around the lens unit 32 of the cap 3. Accordingly, for the side lobe radiated sideways from the transmission antenna, dielectric loss, reflection, refraction, and the like occur at the lateral wall 36, and the side lobe transmitted through the lateral wall 36 is reduced. As a result, it is possible to reduce the side lobe that adversely affects the reflected wave and thereby suppress a decrease in the detection accuracy of the remaining amount or the like of the kerosene 5.

The reflected wave (electromagnetic pulse) received by the receiving antenna is demodulated to become a reception pulse signal and then is input into the calculation IC 22. The calculation IC 22 calculates the time (hereinafter also referred to as propagation time) from when the electromagnetic pulse is transmitted from the transmission antenna to when the reflected wave is received by the receiving antenna, and calculates the remaining amount or the like of the kerosene 5 in the internal space 1a of the fuel tank 1 based on the propagation time. The calculation IC 22 stores in advance the propagation time (hereinafter also referred to as a "full-level propagation time") at the time when the internal space 1a of the fuel tank 1 is sufficiently filled with the kerosene 5 up to an upper-limit amount (hereinafter also referred to as a full level), and calculates the remaining amount or the like of the kerosene 5 from the ratio or difference between the full-level propagation time and the propagation time. The calculation of the remaining amount or the like is not limited to the comparison between the full-level propagation time and the propagation time. The propagation times in a state where the kerosene 5 is empty or at 50% may be stored, and the remaining amount or the like may be calculated based on them.

The calculation IC 22 calculates the distance to the liquid surface 5a for calculation of the remaining amount of the kerosene 5 in the fuel tank 1 at 10-minute intervals, for example, and when the remaining amount falls to 50% or less of the full level (hereinafter also referred to as a predetermined amount or less), for example, the calculation IC 22 outputs a signal indicating the remaining amount or the like of the kerosene 5. The signal output from the calculation IC 22 is input into the external communication IC 90 via the connecting member 80. Upon receipt of the signal indicating the remaining amount or the like of the kerosene 5 from the calculation IC 22, the external communication IC 90 transmits a wireless signal including the remaining amount or the like of the kerosene 5 and a specific number representing the fuel tank 1 to an external device outside the sensor module 100 via the external communication antenna 91. The fuel retailer or management company that has received the wireless signal grasps the remaining amount of the kerosene 5 in the fuel tank 1. In a case where the received wireless signal indicates information for calculating the remaining amount, the system (not illustrated) in the fuel retailer or management company calculates the remaining amount of the kerosene 5, so that the fuel retailer or management company can grasp the remaining amount of the kerosene 5. Note that the signal output from the calculation IC 22 or the wireless signal transmitted from the external communication IC 90 may indicate a ratio of the remaining amount or the like to the full level of the kerosene 5, instead of the remaining amount or the like of the kerosene 5.

Thus, with the use of the sensor module 100 for the fuel tank 1, the fuel retailer or management company receives the wireless signal transmitted from the external communication antenna 91 at the time when the amount of the kerosene 5 in the fuel tank 1 falls to a predetermined amount or less, so that the fuel retailer or management company can grasp the remaining amount of the kerosene 5 at 10-minute intervals. Hereby, the fuel retailer or management company no longer needs to periodically visit to the installation site of the fuel tank 1 to measure the remaining amount of the kerosene 5. The fuel retailer or management company that has grasped that the remaining amount or the like of the kerosene 5 in the fuel tank 1 is the predetermined amount or less can replenish the fuel tank 1 with the kerosene 5 as appropriate. Besides, the owner of the fuel tank 1 can grasp the remaining amount of the kerosene 5 at 10-minute intervals by receiving the wireless signal transmitted from the external communication antenna 91 at home. Accordingly, the owner can request the fuel retailer or management company to replenish the kerosene 5 when the remaining amount of the kerosene 5 in the fuel tank 1 falls to the predetermined amount or less.

### [Effects of Sensor Module]

In the sensor module 100 of the present embodiment, the lateral wall 36 is disposed around the lens unit 32 in the cap 3. Accordingly, for the side lobe radiated sideways from the transmission antenna, dielectric loss, reflection, refraction, and the like occur at the lateral wall 36, and the side lobe transmitted through the lateral wall 36 is reduced. As a result, it is possible to reduce the side lobe that adversely affects the reflected wave reflected from the liquid surface 5a of the kerosene 5 and thereby suppress a decrease in the detection accuracy of the remaining amount or the like of the kerosene 5.

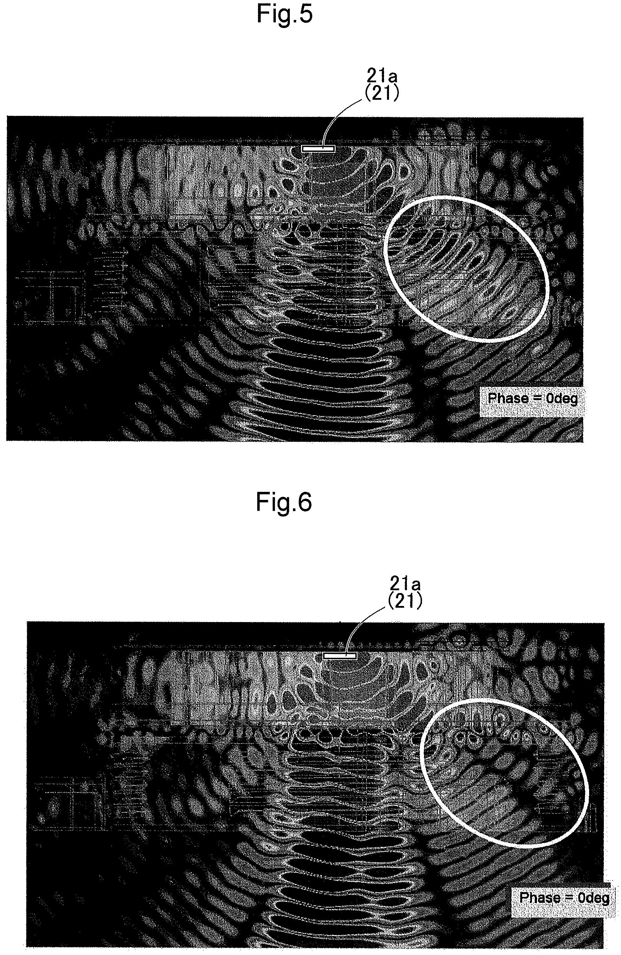

Fig. 5 illustrates an electromagnetic field simulation result of radio waves transmitted from the transmission antenna of the transmitter 21a in a case where no lateral wall 36 is provided. Fig. 6 illustrates an electromagnetic field simulation result of radio waves transmitted from the transmission antenna of the transmitter 21a in a case where the lateral wall 36 is provided. In Figs. 5, 6, the darker the illustrated color is, the greater the intensity of the electromagnetic field, and the portion enclosed by the ellipse indicates the intensity of the electromagnetic field of the side lobe. From Figs. 5, 6, it is found that the side lobe is reduced more when the lateral wall 36 is provided than when the lateral wall 36 is not provided.

The sensor module 100 of the present embodiment is disposed on the outer side of the fuel tank 1. Accordingly, there is no need to modify the existing fuel tank 1 in order to install the sensor module 100 in the fuel tank 1, and the remaining amount or the like of the kerosene 5 stored in the fuel tank 1 can be calculated without modifying the fuel tank 1. Since the remaining amount or the like of the kerosene 5 is calculated using radio waves, the remaining amount or the like of the kerosene 5 can be detected (calculated) easily at predetermined time intervals. Besides, since the remaining amount or the like of the kerosene 5 is calculated by calculating the time required until reception of the radio wave directly reflected from the kerosene 5, the remaining amount or the like of the kerosene 5 can be detected by a single sensor module 100 at high resolution.

The cap 3 of the sensor module 100 of the present embodiment includes the lid 3a, the fixing section 3b, the lens unit 32, the support wall 33, and the lateral wall 36, which are formed integrally in such a manner that molten resin is supplied to a single mold and cured. Accordingly, in comparison with a case where these members are individually manufactured and assembled, it is possible to manufacture the cap 3 with low man-hours and at low cost. Besides, the cap 3 can have high positional accuracy of the lid 3a, the fixing section 3b, the lens unit 32, the support wall 33, and the lateral wall 36.

In the sensor module 100 of the present embodiment, the annular seal 15 is disposed in the boundary between the second peripheral wall 10a of the housing 10 and the first peripheral wall 3d of the fixing section 3b of the cap 3. Accordingly, even in a case where the sensor module 100 is installed outdoors, the first space 11 is maintained in a watertight state, thereby preventing rainwater from entering the first space 11.

With the use of the sensor module 100 of the present embodiment, it is possible to know the remaining amount of the kerosene 5 at a location remote from the fuel tank 1 without visually checking the inside of the fuel tank 1.

In the sensor module 100 of the present embodiment, with the use of millimeter waves for the radio wave, the radio wave can pass through resin. Accordingly, even when the sensor module 100 is disposed on the outer side of the cap 3 made of resin in the fuel tank 1, it is possible to calculate the remaining amount of the kerosene 5 in the fuel tank 1 through the cap 3. In a case where the radio wave is light such as infrared or visible light, at least part of the cap 3 must be made of a transparent or translucent resin, or a hole must be provided in the cap 3, in order for the radio wave to pass through the cap 3. However, in a case where millimeter waves are used for the radio wave, the cap 3 does not need to be made of a transparent or translucent material or to be provided with a hole, and the cap 3 can be made of a colored insulation material which is used for the existing cap 3 and through which light does not pass. In addition, the watertightness of the cap 3 is not impaired since the cap 3 is not provided with a hole. Transparent or translucent materials deteriorate in transmittance as their transparency decreases over time. In a case where the cap 3 is made of metal, the remaining amount or the like of the kerosene 5 in the fuel tank 1 can be calculated through the cap 3 by replacing the cap 3 with a resin cap 3 sold as a dedicated product by the manufacturer of the fuel tank 1. Accordingly, the reliability in terms of safety of the mounting state of the cap 3 to the opening 2 is guaranteed by the manufacturer of the fuel tank 1. Accordingly, the reliability of the conventional functions of the fuel tank 1 is not impaired.

### [Other Embodiments]

(1) In the above embodiment, the support wall 33 and the lateral wall 36 of the sensor module 100 have a cylindrical shape, but the present invention is not limited to this. A single wall may be formed, or a wall may be formed of a structure in which a plurality of curved and/or linear portions is connected, provided that a curved or linear wall is formed around the lens unit 32. The cylindrical lateral wall 36 may be formed doubly or triply around the lens unit 32. The lateral wall 36 can be formed in any shape and in any number, provided that the lateral wall 36 can reduce the side lobe that adversely affects the reflected wave of the radio waves reflected from the liquid surface 5a of the kerosene 5.
(2) In the above embodiment, the lateral wall 36 of the sensor module 100 is made of resin and integrated with the cap 3, but the lateral wall 36 may be made of a material other than resin, such as metal. The lateral wall 36 can be made of any material, provided that the lateral wall 36 can reduce the side lobe that adversely affects the reflected wave of the radio waves reflected from the liquid surface 5a of the kerosene 5. At this time, in a case where the lateral wall 36 is made of metal, for example, the metal lateral wall 36 can be joined to the cap 3 by insert molding at the same time as resin molding of the cap 3.
(3) In the above embodiment, the lateral wall 36 has the projecting end portion 36a that is in contact with the first substrate 40 or is located in the vicinity thereof. Hereby, the lateral wall 36 generally completely overlaps with the transceiver IC 21 as viewed in the radial direction. However, the present invention is not limited to this configuration. The lateral wall 36 may be formed at a height such that the projecting end portion 36a is spaced from the first substrate 40. At this time, as viewed in the radial direction, the lateral wall 36 may be formed at a height such that at least part of the lateral wall 36 overlaps with the transceiver IC 21, or the lateral wall 36 may be formed at a height such that the lateral wall 36 does not overlap with the transceiver IC 21 at all. That is, at least part of the transceiver IC 21 may be located within the radially inner space 36b of the lateral wall 36, or the transceiver IC 21 may not be located within the radially inner space 36b of the lateral wall 36. The lateral wall 36 can be formed at any height, provided that the lateral wall 36 can reduce the side lobe that adversely affects the reflected wave of the radio waves reflected from the liquid surface 5a of the kerosene 5.
(4) In the above embodiment, the lateral wall 36 of the sensor module 100 is provided to extend upward from the bottom wall 31 of the cap 3 toward the transceiver IC 21, but the present invention is not limited to this. Instead of the lateral wall 36 extending from the bottom wall 31 toward the transceiver IC 21, or at the same time as the lateral wall 36 extending toward the transceiver IC 21, the lateral wall 36 may extend from the bottom wall 31 in the direction opposite to the transceiver IC 21, that is, in the direction toward the internal space 1a of the fuel tank 1. The lateral wall 36 can be disposed at any position, provided that the lateral wall 36 can reduce the side lobe that adversely affects the reflected wave of the radio waves reflected from the liquid surface 5a of the kerosene 5.
(5) In the above embodiment, the lateral wall 36 is disposed between the lens unit 32 and the support wall 33, but the present invention is not limited to this. The lateral wall 36 may be disposed radially outside the support wall 33. Even in the case, it is preferable that the lateral wall 36 extend in the same direction as the support wall 33 around the lens unit 32.
(6) In the above embodiment, the resin material of the cap 3 is not identified but may be glass-filled PBT (polybutylene terephthalate) resin, for example. By using a glass-filled resin material, the cap 3 can be formed with high strength. Further, for example, the resin material of the cap 3 may have a relative permittivity of 3 or more. With the use of the resin material having a relative permittivity of 3 or more for the cap 3 including the lateral wall 36, it is possible to reduce the side lobe that adversely affects the reflected wave of the radio waves reflected from the liquid surface 5a of the kerosene 5.
(7) In the above embodiment, the transceiver IC 21 and the calculation IC 22 are mounted on the first substrate 40, and the external communication IC 90 is mounted on the second substrate 50. However, each IC can be mounted on any substrate.
(8) In the above embodiment, the sensor assembly 70 includes the first substrate 40 and the second substrate 50 but may include a single substrate or may include three or more substrates.
(9) In the above embodiment, the sensor module 100 operates by the battery 62a but may operate by a commercial power supply.
(10) In the above embodiment, after the remaining amount of the kerosene 5 falls to 50% or less, the wireless signal representing the remaining amount or the like of the kerosene 5 is transmitted at 10-minute intervals, but the present invention is not limited to this. For example, after the remaining amount of the kerosene 5 falls to 50% or less, the wireless signal may be transmitted each time the remaining amount becomes 40%, 30%, or 20%, that is, each time the kerosene 5 decreases by 10%. In addition, after the remaining amount of the kerosene 5 falls to 20% or less, the wireless signal may be transmitted each time the kerosene 5 decreases by 3%, for example. By increasing the transmission frequency of the wireless signal as the fuel tank 1 approaches empty, the wireless signal can serve as an alert notifying that the fuel tank 1 is becoming empty.

### Industrial Applicability

This disclosure is applicable to a sensor module.

### Reference Signs List

1: fuel tank (container)
1a: internal space
2: opening
3: cap
3a: lid
5: kerosene (contained material)
10: housing
11: first space (enclosed space)
20: sensor unit
21: transceiver IC (transceiver section)
21a: transmitter
21b: receiver
22: calculation IC (calculation section)
32: lens unit
33: support wall
36: lateral wall
60: power supply unit
90: external communication IC (external communication unit)
100: sensor module

## Claims

1. A sensor module mounted to an opening of a container storing a contained material, the sensor module comprising:
a cap; and
a sensor unit,
the cap including:
a lid configured to close the opening;
a lens unit;
a support wall disposed around the lens unit to extend upward and configured to hold the sensor unit; and
a lateral wall,
the sensor unit including:
a transceiver section including a transmitter configured to transmit radio waves, and a receiver configured to receive the radio waves,
the lens unit being disposed to face the transceiver section of the sensor unit,
the transmitter being configured to transmit the radio waves that pass through the lens unit to reach an internal space of the container,
the receiver being configured to receive a reflected wave resulting from the radio waves being reflected from the contained material in the internal space,
the lateral wall being disposed around the lens unit to extend in the same direction as the support wall.

2. The sensor module according to claim 1, wherein
the sensor unit further includes a calculation section configured to calculate a remaining amount of the contained material or information for calculating the remaining amount based on time from when the radio waves are transmitted from the transmitter to when the reflected wave is received by the receiver.

3. The sensor module according to claim 2, further comprising:
an external communication unit configured to wirelessly transmit, to an external device, a signal representing the remaining amount of the contained material or the information for calculating the remaining amount, calculated by the calculation section.

4. The sensor module according to claim 3, further comprising:
a power supply unit configured to supply electric power to the sensor unit and the external communication unit.

5. The sensor module according to any one of claims 1 to 4, further comprising:
a housing attachable to and detachable from the cap, wherein
the sensor unit is stored in a space enclosed by the cap and the housing.

6. The sensor module according to any one of claims 1 to 4, wherein
the lateral wall is integrated with the lid.

7. The sensor module according to any one of claims 1 to 4, wherein
the lateral wall has a cylindrical shape.

8. The sensor module according to any one of claims 1 to 4, wherein
the radio waves transmitted from the transmitter are millimeter waves.
